# EUROPEAN PATENT APPLICATION

(11) **EP 4 773 485 A1**
(43) Date of publication of application: **08.07.2026**
(21) Application number: 25224571.7
(22) Date of filing: 17.12.2025
(51) Int. Cl.: H02K 15/043, H01F 41/074

(54) **2D WAVE-WOUND WIRE FORMING DEVICE**

(30) Priority: 25.12.2024 CN 202411933929
(71) Applicant: UPTEC Intelligent Manufacturing (Wuxi) Co., Ltd., Wuxi City 214000 (CN)
(72) Inventor: YE, Xin, Wuxi City, Jiangsu Province, 214000 (CN)
(74) Representative: Faggioni, Carlo Maria

(57) **Abstract**

A 2D wave-wound wire forming device is disclosed. The forming device includes a workbench, and further includes a moving mechanism installed on the top of the workbench, a forming mechanism and a movable end forming and folding mechanism that are installed on the top of the moving mechanism and driven by the moving mechanism, and a fixed end forming and folding mechanism installed on the top of the workbench and used for cooperating with the forming mechanism during operation. The disclosed device reduces waste of labor and waiting time, and can automatically complete one-step forming of 2D wave-wound wires from copper wires in a straight state. The moving mechanism, the forming mechanism, the movable end forming and folding mechanism, and the fixed end forming and folding mechanism cooperate with each other to achieve automatic reset after single forming, facilitating preparation for subsequent forming of the copper wires.

## Description

### FIELD OF TECHNOLOGY

The present invention belongs to the field of a copper wire forming devices and specifically relates to a 2D wave-wound wire forming device.

### BACKGROUND

2D wave-wound wire forming is a specialized process in production of electronic parts and components and is mainly applied to manufacturing products with winding structures such as inductors and transformers. It is a wire winding technology that forms uniform and regular winding patterns in a two-dimensional plane in a wavelike manner.

2D wave-wound wire forming is a process technology that precisely controls paths and positions of wires to form a wave-shaped two-dimensional winding pattern on specific substrates or planar structures. Compared with conventional winding technologies, it can manufacture complex coils with higher precision and efficiency.

The technology is typically executed by an automated device, and the tension, angle, and position of the wires can be controlled by a high-precision numerical control system, thereby obtaining desired coil shapes.

For the forming device, it is often necessary to process copper wires (W-pins) through multiple different procedures, such as clamping and multi-segment bending.

Therefore, operators need to understand standard operating procedures of each device, which not only consumes manpower but also causes time waste during device replacement due to the movement of the copper wires.

Therefore, a device capable of directly forming straight copper wires is needed to reduce waste of labor and waiting time.

### SUMMARY OF THE INVENTION

To address the above shortcomings, the present invention provides a 2D wave-wound wire forming device, and the device includes a workbench, and further includes a moving mechanism installed on the top of the workbench, a forming mechanism and a movable end forming and folding mechanism that are installed on the top of the moving mechanism and driven by the moving mechanism, and a fixed end forming and folding mechanism installed on the top of the workbench and used for cooperating with the forming mechanism during operation, where
the moving mechanism includes a linear module **I,** two first linear sliding rails, and two second linear sliding rails;
the forming mechanism includes a plurality of upper end forming assemblies, a plurality of lower end forming assemblies, and a hinge telescopic assembly; the plurality of upper end forming assemblies and the plurality of lower end forming assemblies are respectively installed at hinged ends of the hinge telescopic assembly; and positions thereof are changed as the hinge telescopic assembly is straightened and wound;
the movable end forming and folding mechanism and the fixed end forming and folding mechanism have a same structure, are symmetrically installed on left and right sides of the top of the workbench to clamp both ends of a straight copper wire respectively and are movably connected to two ends of the hinge telescopic assembly respectively.

Furthermore, the second linear sliding rail and the first linear sliding rail form a set and are distributed on two sides of the linear module I from a near position to a far position.

Furthermore, the movable end forming and folding mechanism includes a module connecting plate fixed at the linear module I, a slot on the top of the module connecting plate is connected to an installation plate via four uprights, and a hinge positioning block is further fixed on the top of the module connecting plate; a slide table cylinder installation plate is fixedly installed on the installation plate, and a side plate is fixedly installed on a side wall of the slide table cylinder installation plate; a pushdown cylinder is fixedly installed on a right side surface of the side plate, an output end of the pushdown cylinder is connected to a force application rod via a hinge, one end of the force application rod away from the pushdown cylinder is hinged to the right side surface of the side plate; and a fixed clamping block is fixedly installed on the side plate on a same side as the force application rod.

Furthermore, a movable clamping block cooperating with the fixed clamping block is slidably provided on the side plate; a follower block integrally formed therewith is provided at an end of the movable clamping block near the force application rod; and the force application rod is engaged with a groove formed in the follower block through an integrally formed shifting block.

Furthermore, a slide table cylinder is installed on a right side of the slide table cylinder installation plate; a support block is installed on an output end of the slide table cylinder, and a folding roller matching with the copper wire is installed in the support block; one side of the installation plate away from the side plate is connected to a side forming guide assembly via a guide installation block installed; and the side forming guide assembly includes two side guide blocks and one side forming plate, and the side forming plate is positioned between the two side guide blocks.

Furthermore, the hinge telescopic assembly includes several upper end forming support portions, several lower end forming support portions, and a hinge portion; two ends of the hinge portion are respectively hinged to the hinge positioning blocks at the movable end forming and folding mechanism and the fixed end forming and folding mechanism; the hinge portion is formed by hinging several corresponding long hinge plates and short hinge plates; from the short hinge plate to the long hinge plate, then to the long hinge plate, and finally to the short hinge plate, all which are hinged through pins to form a movable member; left and right ends and cross ends of two movable members are further hinged together by hinge pins to form a conventional scissor rod assembly structure; and coaxial upper and lower ends at a hinge joint between two of the long hinge plates are rotatably connected to rollers.

Furthermore, each of the upper end forming support portions includes an upper end forming support plate and an upper end forming base plate; each of the lower end forming support portions includes a lower end forming support plate and a lower end forming base plate; an upper end forming positioning block and a linear module II are installed on the top of the upper end forming support plate; a lower end forming guide assembly is installed on the top of the lower end forming support plate; a middle part of each upper end forming base plate is provided with a strip-shaped slot; and the movable member positioned at a hinged end of the upper end forming base plate is movably engaged in the strip-shaped slot.

Furthermore, a module sliding plate **II** matching with the linear module **II is** installed at the linear module II, and a lower end forming positioning block I and a lower end forming positioning block II that are symmetrically arranged are installed on the top of the module sliding plate II; and
an upper end forming guide assembly matching with the upper end forming positioning block is installed on the top of the module sliding plate II, and includes two forming guide blocks and one U-shaped forming plate; the U-shaped forming plate is fixed between the two forming guide blocks; and adjacent U-shaped forming plates are arranged in a staggered and reversed manner.

Compared with the prior art, the present invention has the following beneficial effects.

The present invention reduces waste of labor and waiting time, and can automatically complete one-step forming of 2D wave-wound wires from copper wires in a straight state. The moving mechanism, the forming mechanism, the movable end forming and folding mechanism, and the fixed end forming and folding mechanism cooperate with each other to achieve automatic reset after single forming, facilitating preparation for subsequent forming of the copper wires.

### BRIEF DESCRIPTION OF THE DRAWINGS

FIG. 1 is a schematic diagram of a 2D wave-wound wire forming device in an initial state according to the present invention.
FIG. 2 is a left view of a movable end forming and folding mechanism according to the present invention.
FIG. 3 is a right view of a movable end forming and folding mechanism according to the present invention.
FIG. 4 is a schematic diagram of a fixed end forming and folding mechanism according to the present invention.

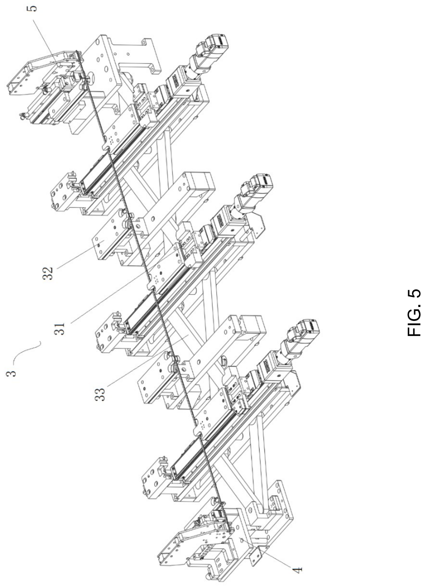

FIG. 5 is a schematic diagram of a forming mechanism in an initial state according to the present invention.
FIG. 6 is a schematic diagram of a forming mechanism in a forming state according to the present invention.
FIG. 7 is an exploded top view of a forming mechanism in a forming state according to the present invention.
FIG. 8 is a structural schematic diagram of a forming mechanism in a forming state according to the present invention.
FIG. 9 is a schematic diagram of an upper end forming mechanism and a lower end forming mechanism in a cooperative state according to the present invention.
FIG. 10 is an exploded schematic diagram of a hinge portion according to the present invention.
FIG. 11 is a schematic diagram of a cooperative structure of a force application rod and a movable clamping block according to the present invention.
FIG. 12 is an exploded schematic diagram of an upper end forming guide assembly according to the present invention.
FIG. 13 is a schematic diagram of a 2D wave-wound wire forming device in a forming state according to the present invention.
FIG. 14 is a schematic diagram of a position of a folding roller and a side forming guide assembly during copper wire side forming according to the present invention.

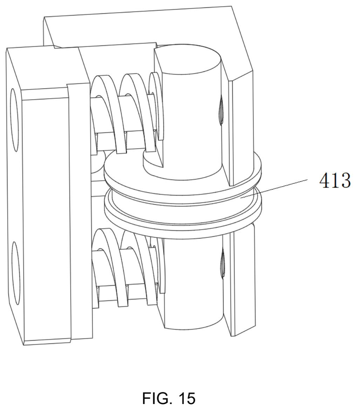

FIG. 15 is a schematic diagram of a spring reset assembly at a folding roller according to the present invention.

### DESCRIPTION OF PREFERRED EMBODIMENTS

To facilitate understanding of the present invention, the device of the present invention will be described more comprehensively below with reference to relevant drawings. Embodiments of the device are provided in the accompanying drawings. However, the device can be implemented in many different forms and is not limited to the embodiments described herein. On the contrary, the purpose of providing these embodiments is to make the disclosures of the present invention more thorough and comprehensive.

In the description of the present invention, it should be noted that unless otherwise specified and defined explicitly, the terms "mount," "connect," and "arrange" should be understood in their general senses. For example, they may refer to a fixed connection and arrangement, and may refer to a detachable connection or arrangement, or an integral connection and arrangement. For those skilled in the art, the specific meanings of the above terms in the present invention can be understood according to the specific circumstances.

In the drawings the following reference numbers are consistently used: 1, workbench; 2, moving mechanism; 21, linear module I; 22, first linear sliding rail; 23, second linear sliding rail; 3, forming mechanism; 31, upper end forming assembly; 32, lower end forming assembly; 33, hinge telescopic assembly; 331, upper end forming support portion; 3311, upper end forming support plate; 3312, upper end forming base plate; 3313, upper end forming positioning block; 3314, linear module II; 3315, module sliding plate II; 3316, upper end forming guide assembly; 3316a, forming guide block; 3316b, U-shaped forming plate; 3317, strip-shaped slot; 332, lower end forming support portion; 3321, lower end forming support plate; 3322, lower end forming base plate; 3323, lower end forming positioning block I; 3324, lower end forming positioning block II; 3325, lower end forming guide assembly; 333, hinge portion; 3331, long hinge plate; 3332, short hinge plate; 3333, roller; 4, movable end forming and folding mechanism; 401, module connecting plate; 402, upright; 403, installation plate; 404, hinge positioning block; 405, slide table cylinder installation plate; 406, side plate; 407, pushdown cylinder; 408, force application rod; 409, fixed clamping block; 410, movable clamping block; 411, slide table cylinder; 412, support block; 413, folding roller; 414, guide installation block; 415, side forming guide assembly; 4151, side guide block; 4152, side forming plate; 416, follower block; 417, groove; 418, shifting block; 5, fixed end forming and folding mechanism.

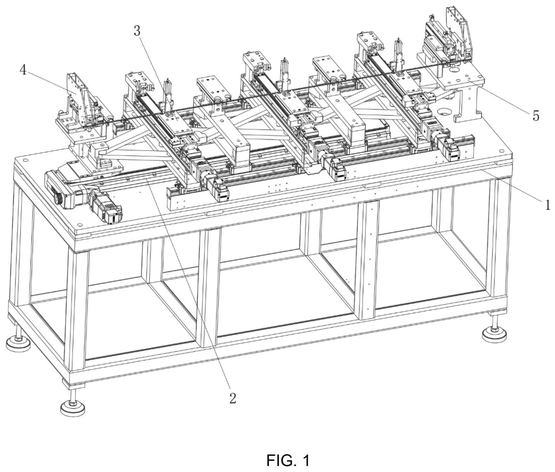

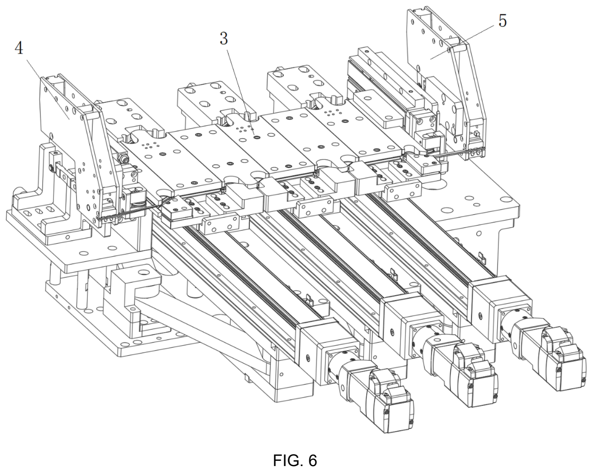

As shown in FIG. 1 and FIG. 6, the embodiment provides a 2D wave-wound wire forming device, and the device includes a moving mechanism 2 installed on the top of the workbench 1, a forming mechanism 3 and a movable end forming and folding mechanism 4 that are installed on the top of the moving mechanism 2 and driven by the moving mechanism 2, and a fixed end forming and folding mechanism 5 installed on the top of the workbench 1 and used for cooperating with the forming mechanism 3 to fix a wave-wound wire.

Specifically, the moving mechanism 2 includes a linear module I 21, two first linear sliding rails 22, and two second linear sliding rails 23. **The** second linear sliding rails 23 and the first linear sliding rails 22 that are positioned on two sides of the linear module I 21 are distributed from a near position to a far position. **The** linear module I 21 drives the movable end forming and folding mechanism 4 installed on the top thereof to move toward the fixed end forming and folding mechanism 5, such that the forming mechanism 3 between the movable end forming and folding mechanism and the fixed end forming and folding mechanism to deform synchronously to complete one-step forming of wave-wound copper wires.

**The** working process is as follows: the movable end forming and folding mechanism 4 slides toward the fixed end forming and folding mechanism 5 under the drive of the linear module I 21, thereby pushing the forming mechanism 3 to deform and complete wave-wound forming of the copper wires.

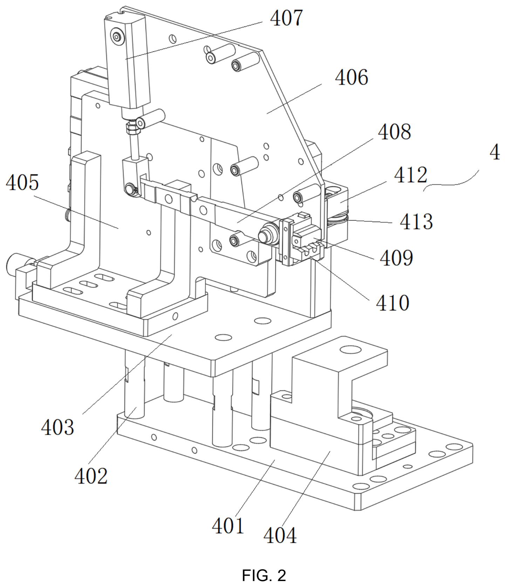

Specifically, as shown in FIG. 2, the movable end forming and folding mechanism 4 includes a module connecting plate 401 fixed at the linear module I 21, a slot on the top of the module connecting plate 401 is connected to an installation plate 403 via four uprights 402, and a hinge positioning block 404 is further fixed on the top of the module connecting plate 401; a slide table cylinder installation plate 405 is fixedly installed on the installation plate 403, and a side plate 406 is fixedly installed on a side wall of the slide table cylinder installation plate 405; a pushdown cylinder 407 is fixedly installed on a right side surface of the side plate 406, an output end of the pushdown cylinder 407 is connected to a force application rod 408 via a hinge, one end of the force application rod 408 away from the pushdown cylinder 407 is hinged to the right side surface of the side plate 406; and a fixed clamping block 409 is fixedly installed on the side plate 406 on a same side as the force application rod 408.

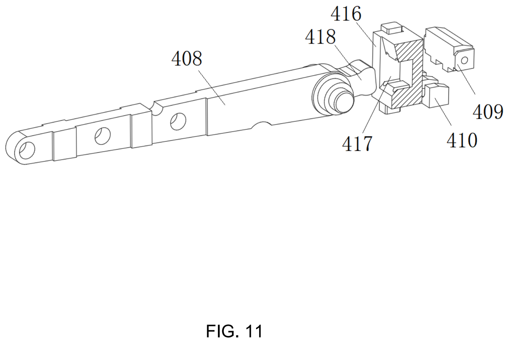

As shown in FIG. 11, a movable clamping block 410 cooperating with the fixed clamping block 409 is slidably provided on the side plate 406; a follower block 416 integrally formed therewith is provided at an end of the movable clamping block 410 near the force application rod 408; and the force application rod 408 is engaged with a groove 417 formed in the follower block 416 through an integrally formed shifting block 418, thereby enabling the force application rod 408 to synchronously drive the follower block 416 to move.

**The** working principle thereof is as follows: the straight copper wire is threaded through one side of the movable end forming and folding mechanism 4 and threaded out of the other side of the fixed end forming and folding mechanism 5. After the copper wire is threaded, the pushdown cylinder 407 operates to press down the hinged force application rod 408. One end of the force application rod 408 away from the pushdown cylinder 407 rotates and tilts upward and pushes the movable clamping block 410 to slide toward the fixed clamping block 409. **The** movable clamping block 410 and the fixed clamping block 409 move toward each other and clamp the copper wires, preparing for subsequent stable forming of the copper wires.

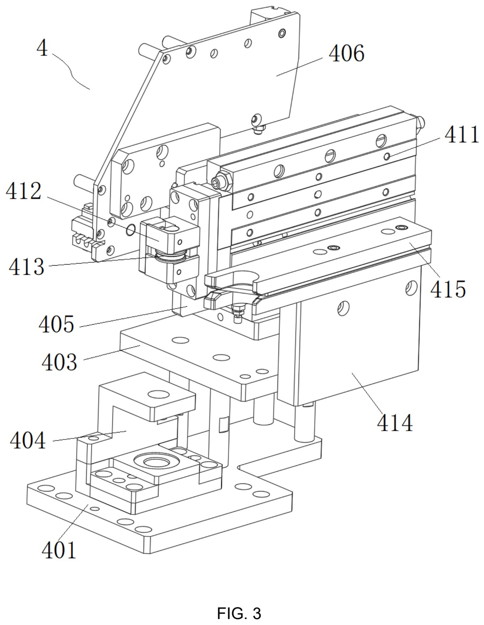

As shown in FIG. 3, a slide table cylinder 411 is installed on a right side of the slide table cylinder installation plate 405; a support block 412 is installed on an output end of the slide table cylinder 411, the support block 412 is of a split design, and a folding roller 413 matching with the copper wire is installed between two split portions of the support block 412; one side of the installation plate 403 away from the side plate 406 is connected to a side forming guide assembly 415 via a guide installation block 414 installed; the side forming guide assembly 415 includes two side guide blocks 4151 and one side forming plate 4152, and the side forming plate 4152 is positioned between the two side guide blocks 4151 and used to limit and form the copper wire; and a working end of the side forming plate 4152 is an inclined surface matching with the forming mechanism 3.

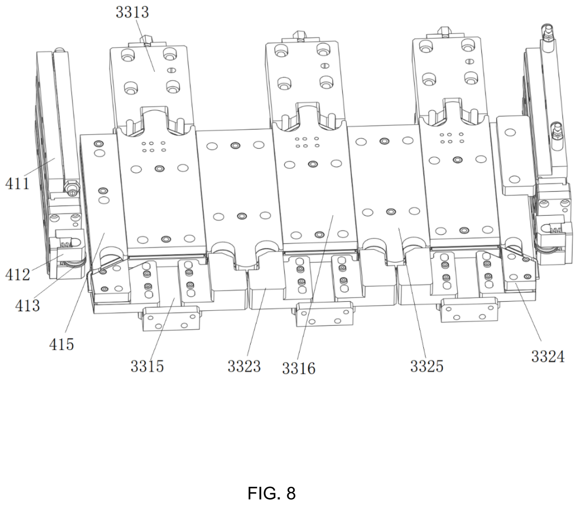

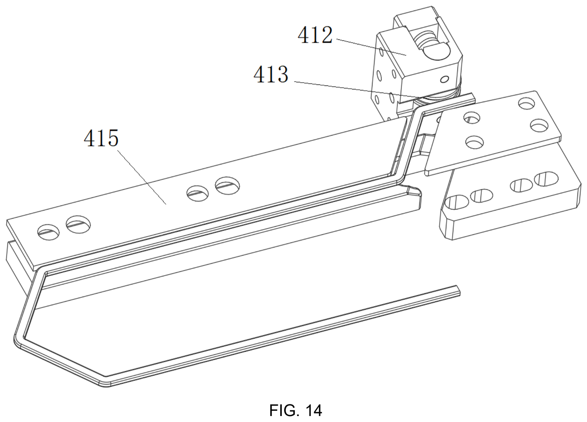

**The** working principle thereof is as follows: as shown in FIG. 14, during side folding, the slide table cylinder 411 operates, and after extending, pushes the support block 412 toward the copper wire clamped by the movable clamping block 410. The folding roller 413 cooperates with the side forming guide assembly 415 to bend the straight side of the copper wire into a right angle. The shape of the copper wire side is as shown in FIG. 6 and FIG. 8.

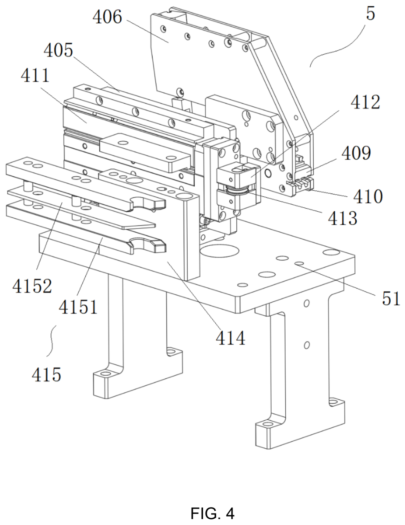

As shown in FIG. 4, the structure of the fixed end forming and folding mechanism 5 is identical to that of the movable end forming and folding mechanism 4 and is symmetrically hinged to left and right ends of the forming mechanism 3.

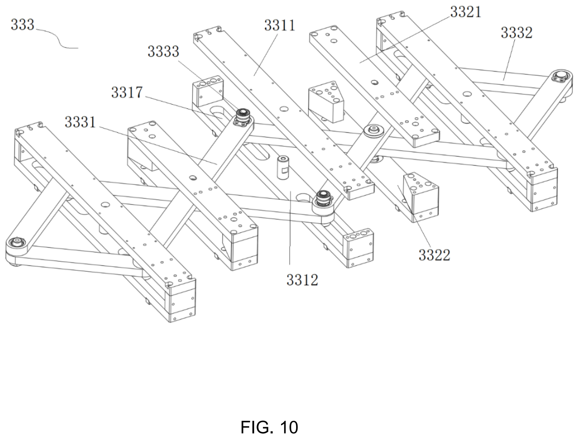

The forming mechanism 3 includes a plurality of upper end forming assemblies 31, a plurality of lower end forming assemblies 32, and a hinge telescopic assembly 33; the plurality of upper end forming assemblies 31 and the plurality of lower end forming assemblies 32 are respectively installed at hinged ends of the hinge telescopic assembly 33; and positions thereof are changed as the hinge telescopic assembly 33 is straightened and wound. Specifically, as shown in FIG. 10, the hinge telescopic assembly 33 includes several upper end forming support portions 331, several lower end forming support portions 332, and a hinge portion 333; the hinge portion 333 is formed by hinging several corresponding long hinge plates 3331 and short hinge plates 3332; from the short hinge plate 3332 to the long hinge plate 3331, then to the long hinge plate 3331, and finally to the short hinge plate 3332, all which are hinged through pins to form a movable member; left and right ends and cross ends of two movable members are further hinged together by hinge pins to form a conventional scissor rod assembly structure; two ends of the hinge portion 333 are respectively hinged to the hinge positioning blocks 404 at the movable end forming and folding mechanism 4 and the fixed end forming and folding mechanism 5; and coaxial upper and lower ends at a hinge joint between two of the long hinge plates 3331 are rotatably connected to rollers 3333.

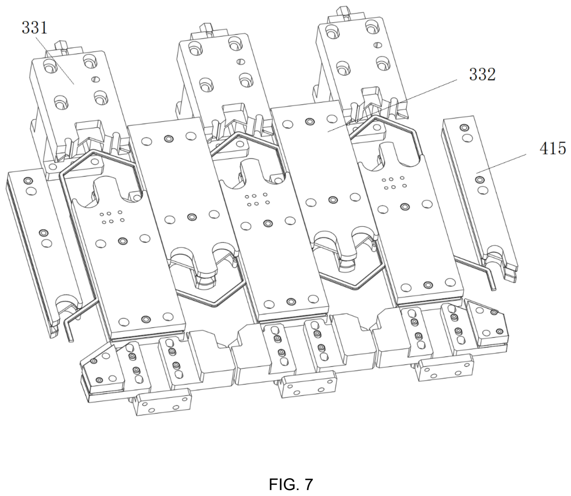

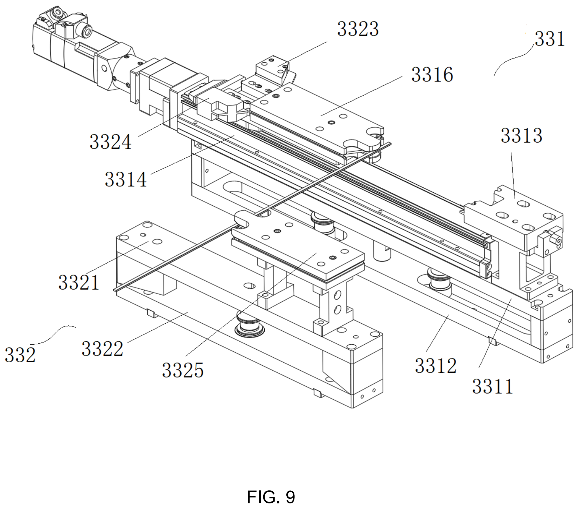

As shown in FIG. 7 to FIG. 9, each of the upper end forming support portions 331 includes an upper end forming support plate 3311 and an upper end forming base plate 3312; each of the lower end forming support portions 332 includes a lower end forming support plate 3321 and a lower end forming base plate 3322; the upper end forming support plate 3311 is fixedly installed on the top of the upper end forming base plate 3312; the lower end forming support plate 3321 spans the linear module I 21 and is slidably installed on two second linear sliding rails 23; and an upper end forming positioning block 3313 and a linear module II 3314 are installed on the top of the upper end forming support plate 3311.

It should be noted that a middle part of each upper end forming base plate 3312 is provided with a strip slot 3317; and the movable member positioned at a hinged end of the upper end forming base plate 3312 is movably engaged in the strip-shaped slot 3317.

A module sliding plate II 3315 matching with the linear module II is installed at the linear module II 3314, and a lower end forming positioning block I 3323 and a lower end forming positioning block II 3324 that are symmetrically arranged are installed on the top of the module sliding plate II 3315. It should be noted that two lower end forming positioning blocks II 3324 are provided only at the outermost positions of all the module sliding plates II 3315. A working surface of the lower end forming positioning block II 3324 is an inclined plane and is used to cooperate with the folding roller 413 to limit and form the copper wire into a right angle. It should be noted that a spring reset assembly is installed at one end of the folding roller 413 away from the side forming guide assembly 415, enabling elastic reset of a rotating shaft inside the folding roller 413 to more stably bend the copper wires. A lower end forming guide assembly 3325 is installed on the top of the lower end forming support plate 3321 and used to match with the lower end forming positioning blocks I 3323 on two sides thereof to achieve wave-wound forming of the copper wires.

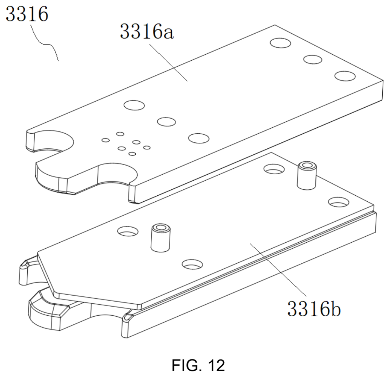

An upper end forming guide assembly 3316 matching with the upper end forming positioning block 3313 is installed on the top of the module sliding plate II 3315. As shown in FIG. 12, the upper end forming guide assembly 3316 includes two forming guide blocks 3316a and one U-shaped forming plate 3316b; and the U-shaped forming plate 3316b is fixed between the two forming guide blocks 3316a. It should be noted that adjacent U-shaped forming plates 3316b are arranged in a staggered and reversed manner to achieve wave-wound forming of the copper wires. The working process thereof is as follows: the upper end forming guide assembly 3316 and the lower end forming guide assembly 3325 are respectively aligned at the straight copper wire that is not bent. During forming, the copper wire is placed between the two forming guide blocks 3316a, helping each U-shaped forming plate 3316b to press and form the straight copper wire.

For the 2D wave-wound wire forming device of the embodiment, before operation, as shown in FIG. 1, the movable end forming and folding mechanism 4 is slidably provided on the linear module I21. When the movable end forming and folding mechanism 4 moves toward the fixed end forming and folding mechanism 5 under the motion of the linear module I21, the hinge telescopic assembly 33 is pushed to contract, that is, the short hinge plate 3332 is pushed to press against the long hinge plate 3331, and the two rollers 3333 on the long hinge plate 3331 move away from each other, driving the lower end forming assemblies 32 and the upper end forming assemblies 31 to move toward each other to achieve wave-wound forming.

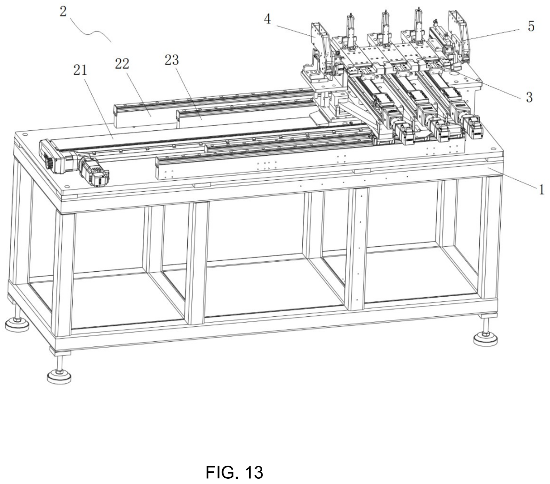

Meanwhile, the upper end forming guide assembly 3316 in the upper end forming assembly 31 moves toward the upper end forming positioning block 3313 under the action of the linear module II 3314, while the lower end forming positioning block I 3323 and the lower end forming positioning block II 3324 respectively move toward the lower end forming guide assembly 3325 and the side forming guide assembly 415, thereby achieving one-step wave-wound forming of the copper wires, as shown in FIG. 13.

Finally, the moving mechanism 2 resets, the movable end forming and folding mechanism 4 moves away from the fixed end forming and folding mechanism 5 to pull the short hinge plate 3332 hinged to the movable end forming and folding mechanism 4, and the two rollers 3333 hinged at the end of the long hinge plate 3331 move toward each other, thereby unfolding the hinge telescopic assembly 33 in preparation for next forming.

It should be noted that the structure described in the present invention can be implemented in various forms and is not limited to the embodiments described herein. Any equivalent transformation made by those skilled in the art based on the content of this specification and accompanying drawings, direct or indirect applications in other related technical fields, such as loading and unloading of other items, should fall within the scope of patent protection of the present invention as defined by the appended claims.

## Claims

1. A 2D wave-wound wire forming device, comprising a workbench (1), and further comprising a moving mechanism (2) installed on the top of the workbench (1), a forming mechanism (3) and a movable end forming and folding mechanism (4) that are installed on the top of the moving mechanism (2) and driven by the moving mechanism (2), and a fixed end forming and folding mechanism (5) installed on the top of the workbench (1) and used for cooperating with the forming mechanism (3) during operation, wherein
the moving mechanism (2) comprises a linear module I (21), two first linear sliding rails (22), and two second linear sliding rails (23);
the forming mechanism (3) comprises a plurality of upper end forming assemblies (31), a plurality of lower end forming assemblies (32), and a hinge telescopic assembly (33); the plurality of upper end forming assemblies (31) and the plurality of lower end forming assemblies (32) are respectively installed at hinged ends of the hinge telescopic assembly (33); and positions thereof are changed as the hinge telescopic assembly (33) is straightened and wound;
the movable end forming and folding mechanism (4) comprises a module connecting plate (401) fixed at the linear module I (21), a slot on the top of the module connecting plate (401) is connected to an installation plate (403) via four uprights (402), and a hinge positioning block (404) is further fixed on the top of the module connecting plate (401); a slide table cylinder installation plate (405) is fixedly installed on the installation plate (403), and a side plate (406) is fixedly installed on a side wall of the slide table cylinder installation plate (405); a pushdown cylinder (407) is fixedly installed on a right side surface of the side plate (406), an output end of the pushdown cylinder (407) is connected to a force application rod (408) via a hinge, one end of the force application rod (408) away from the pushdown cylinder (407) is hinged to the right side surface of the side plate (406); and a fixed clamping block (409) is fixedly installed on the side plate (406) on a same side as the force application rod (408);
the hinge telescopic assembly (33) comprises several upper end forming support portions (331), several lower end forming support portions (332), and a hinge portion (333); two ends of the hinge portion (333) are respectively hinged to the hinge positioning blocks (404) at the movable end forming and folding mechanism (4) and the fixed end forming and folding mechanism (5); the hinge portion (333) is formed by hinging several corresponding long hinge plates (3331) and short hinge plates (3332); from the short hinge plate (3332) to the long hinge plate (3331), then to the long hinge plate (3331), and finally to the short hinge plate (3332), all which are hinged through pins to form a movable member; left and right ends and cross ends of two movable members are further hinged together by hinge pins to form a conventional scissor rod assembly structure; and coaxial upper and lower ends at a hinge joint between two of the long hinge plates (3331) are rotatably connected to rollers (3333); and
the movable end forming and folding mechanism (4) and the fixed end forming and folding mechanism (5) have a same structure, are symmetrically installed on left and right sides of the top of the workbench (1) to clamp both ends of a straight copper wire respectively and are movably connected to two ends of the hinge telescopic assembly (33) respectively.

2. **The** 2D wave-wound wire forming device according to claim 1, wherein the second linear sliding rail (23) and the first linear sliding rail (22) form a set and are distributed on two sides of the linear module I (21) from a near position to a far position.

3. **The** 2D wave-wound wire forming device according to claim 2, wherein a movable clamping block (410) cooperating with the fixed clamping block (409) is slidably provided on the side plate (406); a follower block (416) integrally formed therewith is provided at an end of the movable clamping block (410) near the force application rod (408); and the force application rod (408) is engaged with a groove (417) formed in the follower block (416) through an integrally formed shifting block (418).

4. **The** 2D wave-wound wire forming device according to claim 2, wherein a slide table cylinder (411) is installed on a right side of the slide table cylinder installation plate (405); a support block (412) is installed on an output end of the slide table cylinder (411), and a folding roller (413) matching with the copper wire is installed in the support block (412); one side of the installation plate (403) away from the side plate (406) is connected to a side forming guide assembly (415) via a guide installation block (414) installed; and the side forming guide assembly (415) comprises two side guide blocks (4151) and one side forming plate (4152), and the side forming plate (4152) is positioned between the two side guide blocks (4151).

5. **The** 2D wave-wound wire forming device according to claim 1, wherein each of the upper end forming support portions (331) comprises an upper end forming support plate (3311) and an upper end forming base plate (3312); each of the lower end forming support portions (332) comprises a lower end forming support plate (3321) and a lower end forming base plate (3322); an upper end forming positioning block (3313) and a linear module II (3314) are installed on the top of the upper end forming support plate (3311); a lower end forming guide assembly (3325) is installed on the top of the lower end forming support plate (3321); a middle part of each upper end forming base plate (3312) is provided with a strip-shaped slot (3317); and the movable member positioned at a hinged end of the upper end forming base plate (3312) is movably engaged in the strip-shaped slot (3317).

6. **The** 2D wave-wound wire forming device according to claim 5, wherein a module sliding plate II (3315) matching with the linear module II is installed at the linear module II (3314), and a lower end forming positioning block I (3323) and a lower end forming positioning block II (3324) that are symmetrically arranged are installed on the top of the module sliding plate II (3315); and
an upper end forming guide assembly (3316) matching with the upper end forming positioning block (3313) is installed on the top of the module sliding plate II (3315), and comprises two forming guide blocks (3316a) and one U-shaped forming plate (3316b); the U-shaped forming plate (3316b) is fixed between the two forming guide blocks (3316a); and adjacent U-shaped forming plates (3316b) are arranged in a staggered and reversed manner.
